# EUROPÄISCHE PATENTSCHRIFT

(11) **EP 0 697 265 B1**
(45) Veröffentlichungstag und Bekanntmachung des Hinweises auf die Patenterteilung: **29.12.1997**
(21) Anmeldenummer: 95112679.6
(22) Anmeldetag: 11.08.1995
(51) Int. Cl.: B23K 9/173

(54) **Verfahren zum Metallschutzgasschweissen mit rotierendem Lichtbogen**
Gas metal arc welding process with rotating arc
Procédé de soudage avec tournant sous atmosphère protectrice

(30) Priorität: 18.08.1994 DE 4429228
(43) Veröffentlichungstag der Anmeldung: 21.02.1996
(73) Patentinhaber: Linde Aktiengesellschaft, 65189 Wiesbaden (DE)
(72) Erfinder: Ladi, Zsolt, H-3532 Miskolc (HU); Sapia, Wolfgang, D-85716 Unterschleissheim (DE)
(74) Vertreter: Kasseckert, Rainer

(56) Entgegenhaltungen:
- DE-A- 4 206 105
- FR-A- 2 551 377
- GB-A- 1 548 340
- US-A- 2 916 601
- PATENT ABSTRACTS OF JAPAN vol. 10 no. 342 (M-536) ,19.November 1986 & JP-A-61 144274 (KAWASAKI STEEL CORP) 1.Juli 1986,
- PATENT ABSTRACTS OF JAPAN vol. 5 no. 206 (M-104) ,26.Dezember 1981 & JP-A-56 122675 (HITACHI ZOSEN CORP) 26.September 1981,
- PATENT ABSTRACTS OF JAPAN vol. 13 no. 405 (M-868) ,7.September 1989 & JP-A-01 148473 (NKK CORP ) 9.Juni 1989,

## Beschreibung

Die Erfindung betrifft ein Verfahren zum Metallschutzgasschweißen mit rotierendem Lichtbogen, bei dem ein Lichtbogen zwischen abschmelzender Elektrode und Werkstück ausgebildet wird, eine im wesentlichen konstante Spannung zur Lichtbogenbildung angelegt wird und die Elektrode durch ein Kontaktrohr hindurch in den Lichtbogen hinein eingebracht wird und ein bestimmter Abstand zwischen Kontaktrohr und Werkstück eingehalten wird (siehe DE-A-42 06 105).

Bei den hinsichtlich der Abschmelzleistung besonders leistungsstarken Schweißverfahren mit rotierenden Lichtbögen, die üblicherweise mit Kontaktrohrabständen von 25 bis 35 mm und mit Schweißspannungen zwischen 30 und 60 V mit Elektrodendurchmesser zwischen 0,8 und 1,6 mm ausgeführt werden, wobei Schutzgase aus Argon, Argon-Kohlendioxid (< 10%), Argon mit geringer Sauerstoffbeigabe, Argon-Helium-Mischungen mit Anteilen bis zu 20 % Kohlendioxid oder Ar-He-CO₂-O₂-Mischungen zur Anwendung kommen (vgl. US-A-2 916 601 oder DE-A-42 06 105), treten im praktischen Einsatz - trotz abgestimmter Einstellung der Schweißparameter - doch immer wieder charakteristische Schweißfehler auf. Diese liegen vermutlich darin begründet, daß der gewünschte rotierende Lichtbogen im laufenden Betrieb immer wieder einmal den Betriebszustand des rotierenden Lichtbogens verläßt und kurzzeitig in einen sogenannten modifizierten Sprühlichtbogen übergeht, der einen ungünstigen tiefen und sehr schmalen Einbrand ergibt.

Außerdem ist der Einbrand bei den üblichen Rotationslichtbögen zwar meist zufriedenstellend, jedoch im allgemeinen etwas breit und eher flach, so daß aus Gründen der Schweißnahtqualität ein tiefergehender Einbrand durchaus wünschenswert wäre.

Die DE-A-42 06 105 lehrt ein Verfahren zum Engspaltschweißen mit rotierendem Lichtbogen, wobei ein Schweißschutzgasgemisch bestehend aus Argon und/oder Helium mit bis zu 15 Vol% CO₂ und/oder O₂ angeführt und konkret ein Schutzgasgemisch aus aus 4 % O₂, 5 % CO₂ und Rest Argon beschrieben wird.

Das Dokument US-A-2,916,601 beschreibt ein Lichtbogenschweißverfahren mit rotierendem Lichtbogen, bei dem ein Schutzgasgemisch aus Argon und 1 % O₂ eingesetzt wird.

Die Aufgabenstellung der Erfindung bestand daher darin, ein Metallschutzgasschweißverfahren mit rotierendem Lichtbogen anzugeben, das die gelegentlich auftretenden Sprühlichtbögen und die damit einhergehenden Fehler vermeidet und das grundsätzlich zu einem tieferen Einbrand führt.

Diese Aufgabe wird erfindungsgemäß durch ein Verfahren zum Metallschutzgasschweißen mit rotierendem Lichtbogen gelöst, bei dem
(A) ein Lichtbogen zwischen abschmelzender Elektrode und Werkstück ausgebildet wird,
(B) eine im wesentlichen konstante Spannung zur Lichtbogenbildung angelegt wird,
(C) die Elektrode durch ein Kontaktrohr hindurch in den Lichtbogen hinein eingebracht wird und ein bestimmter Abstand zwischen Kontaktrohr und Werkstück eingehalten wird,
(D) der entstehende Rotations-Lichtbogen mit einem Schutzgas abgeschirmt wird, das 1 bis 5 Vol% Sauerstoff, 14 bis 34 Vol% Helium oder Kohlendioxid und 65 bis 85 Vol% Argon enthält,
(E) der beim Schweißen mit rotierendem Lichtbogen übliche Kontaktrohrabstand von 25 bis 35 mm um 10 bis 30% verkleinert eingestellt und
(F) die beim Schweißen mit rotierendem Lichtbogen übliche Spannung von 30 bis 60 V um 20 bis 40 % erniedrigt eingestellt wird.

Der Lichtbogen nach dem erfindungsgemäßen Verfahren besitzt eine gegen Null gehende Neigung, in den unerwünschten modifizierten Sprühlichtbogen überzugehen. Die erfindungsgemäßen Schutzgasgemische tragen hierzu wesentlich bei und reichen in ihrer Wirkung so weit, daß die Schweißungen praktisch unabhängig von der Qualität des Zusatzwerkstoffes im Qualitätsbereich SG2 der DIN 8559 bleiben. Ebenso trägt das Schutzgas dazu bei, ein tieferes Einbrandprofil zu erhalten.

Erfindungsgemäß wird ein - im Vergleich zum üblichen Abstand beim Schweißen mit rotierendem Lichtbogen - um 10 bis 30 % verkleinerter Abstand eingestellt, sowie eine - im Vergleich zu üblichen Spannungen bei beim Schweißen mit rotierendem Lichtbogen - um 20 bis 40 % erniedrigte Spannung eingestellt.

Im erfindungsgemäßen Verfahren erhöht sich der Schweißstrom um ca. 10%. Die Erfindung richtet sich auf alle üblichen Elektrodendurchmesser zwischen 0,8 und 1,6 mm.

Beispielsweise wird die Erfindung im Falle einer 1,2 mm-Elektrode in der Weise ausgeführt, daß das Kontaktrohr in einem Abstand von 20 bis 30 mm vom Werkstück geführt wird (üblich sind 25 bis 35 mm), wobei mit einer Schweißspannung von 25 bis 48 V gearbeitet wird (üblich sind 35 bis 60 V), im übrigen jedoch bekannte Werte beispielsweise für den Drahtvorschub und die Schweißgeschwindigkeit beibehalten werden.

Mit den Maßnahmen und dem Schutzgas gemäß der Erfindung wird erreicht, daß ein räumlich eng begrenzter Rotations-Lichtbogen entsteht, der eine kleinere Ausdehnung als übliche Rotations-Lichtbögen besitzt. Damit ist auch eine höhere Energiedichte verbunden.

Der durch die Verringerung des Kontaktrohrabstandes und der Schweißspannung erhaltene kürzere und konzentriertere Rotationslichtbogen ergibt eine Einbrandvertiefung und außerdem eine geringere Turbulenz im Schweißbad, womit eine Verringerung der Porenbildung einhergeht. Bei der optischen Beurteilung der erhaltenen Schweißnähte ist eine glattere Nahtoberfläche feststellbar, als sie mit den üblichen rotierenden Lichtbögen erhalten wird. Ein Effekt des vorgeschlagenen Verfahrens besteht beispielsweise auch darin, daß die in einer Lage durchschweißbare Blechdicke beim erfindungsgemäßen Verfahren im Vergleich zu konventionellen Verfahren deutlich erhöht ist.

Der Werkstoffübergang mit rotierendem Lichtbogen war bisher ferner ungeeignet für Schweißungen in Zwangslage, da der rotierende Lichtbogen bei konventionellen Parameterkombinationen die Dünnflüssigkeit des Schmelzbades nicht verhindern konnte. Mit dem erfindungsgemäßen Vorschlag (verringerter Kontaktrohrabstand, niedrigere Spannung, angepaßtes Schutzgas) können Zwangslagenschweißungen ohne Schwierigkeiten durchgeführt werden.

Im folgenden wird die Erfindung anhand einiger Schweißsituationen mit Standardstahlwerkstoffen und anhand von Parameterangaben beispielhaft näher erläutert. Mit den Angaben werden die oben geschilderten Effekte und entsprechende Schweißergebnisse erzielt. Es wurde mit einer 1,2 mm-Elektrode gearbeitet.

| 1. Schweißen von Kehlnähten | | |
|---|---|---|
| | Wannenlage | horizontal |
| Drahtvorschub [m/min] | 30 | 30 |
| Kontaktrohrabstand [mm] | 24 | 30 |
| Spannung [V] | 39 | 36 |
| Schweißgeschwindigkeit [cm/min] | 50 | 90 |

| 2. Stumpfnahtschweißen (mehrlagig, Wannenlage) | | | |
|---|---|---|---|
| Lagenzahl | 1 | 2 | 3 |
| Drahtvorschub [m/min] | 15 | 25 | 35 |
| Kontaktrohrabstand [mm] | 34 | 41 | 48 |
| Spannung [V] | 28 | 28 | 28 |
| Schweißgeschwindigkeit [cm/min] | 30 | 40 | 50 |

## Patentansprüche

1. Verfahren zum Metallschutzgasschweißen mit rotierendem Lichtbogen, bei dem
(A) ein Lichtbogen zwischen abschmelzender Elektrode und Werkstück ausgebildet wird,
(B) eine im wesentlichen konstante Spannung zur Lichtbogenbildung angelegt wird,
(C) die Elektrode durch ein Kontaktrohr hindurch in den Lichtbogen hinein eingebracht wird und ein bestimmter Abstand zwischen Kontaktrohr und Werkstück eingehalten wird,
(D) der entstehende Rotations-Lichtbogen mit einem Schutzgas abgeschirmt wird, das 1 bis 5 Vol% Sauerstoff, 14 bis 34 Vol% Helium oder Kohlendioxid und 65 bis 85 Vol% Argon enthält,
(E) der beim Schweißen mit rotierendem Lichtbogen übliche Kontaktrohr abstand von 25 bis 35 mm um 10 bis 30% verkleinert eingestellt und
(F) die beim Schweißen mit rotierendem Lichtbogen übliche Spannung von 35 bis 60 V um 20 bis 40 % erniedrigt eingestellt wird.

2. Verfahren zum Metallschutzgasschweißen nach Anspruch 1,
**dadurch gekennzeichnet**, daß der entstehende Rotations-Lichtbogen mit einem Schutzgas abgeschirmt wird, das 2 bis 4 Vol% Sauerstoff, 20 bis 30 Vol% Helium oder Kohlendioxid und 66 bis 78 Vol% Argon enthält.

3. Verfahren zum Metallschutzgasschweißen nach Anspruch 1 oder 2,
**dadurch gekennzeichnet**, daß der beim Schweißen mit rotierendem Lichtbogen übliche Kontaktrohrabstand von 25 bis 35 mm um 15 bis 25% verkleinert und die beim Schweißen mit rotierendem Lichtbogen übliche Spannung von 35 bis 60 V um 20 bis 30 % erniedrigt eingestellt wird.

4. Anwendung des Verfahrens nach den obigen Ansprüchen auf das Schweißen in Zwangslage.

## Claims

1. Gas metal-arc welding process with rotating arc, in which
(A) an arc is formed between melting electrode and workpiece,
(B) an essentially constant voltage is applied in order to form the arc,
(C) the electrode is introduced into the arc through a contact tube and a specific distance is maintained between contact tube and workpiece,
(D) the rotating arc formed is shielded with an inert gas which contains 1 to 5 vol% oxygen, 14 to 34 vol% helium or carbon dioxide and 65 to 85 vol% argon,
(E) the contact-tube-to-work distance of 25 to 35 mm which is usual when welding with a rotating arc is set at a level which is 10 to 30% lower, and
(F) the voltage of 35 to 60 V which is usual when welding with a rotating arc is set at a level which is 20 to 40% lower.

2. Gas metal-arc welding process according to Claim 1, characterized in that the rotating arc formed is shielded with an inert gas which contains 2 to 4 vol% oxygen, 20 to 30 vol% helium or carbon dioxide and 66 to 78 vol% argon.

3. Gas metal-arc welding process according to Claim 1 or 2, characterized in that the contact-tube-to-work distance of 25 to 35 mm which is usual when welding with a rotating arc is set at a level which is 15 to 25% lower and the voltage of 35 to 60 V which is usual when welding with a rotating arc is set at a level which is 20 to 30% lower.

4. Use of the process according to the above claims in out-of-position welding.

## Revendications

1. Procédé de soudage de métal avec arc électrique tournant sous atmosphère protectrice, lors duquel
(A) un arc électrique est formé entre l'électrode fondante et la pièce,
(B) une tension pour l'essentiel constante est appliquée en vue de la formation de l'arc électrique,
(C) l'électrode est introduite à travers un tube de contact dans l'arc électrique et une distance déterminée est maintenue entre le tube de contact et la pièce,
(D) l'arc électrique tournant qui se forme est protégé par un gaz de protection, qui contient de 1 à 5 % en volume d'oxygène, de 14 à 34 % en volume d'hélium ou de gaz carbonique, et de 65 à 85 % en volume d'argon,
(E) la distance du tube de contact, usuelle lors du soudage à arc électrique tournant, de 25 à 35 mm, est réglée par diminution de 10 à 30 % et
(F) la tension, usuelle lors du soudage à arc électrique tournant, de 35 à 60 V, est réglée par diminution d'une proportion de 20 à 40 %.

2. Procédé de soudage de métal sous atmosphère protectrice selon la revendication 1, caractérisé en ce que l'arc électrique tournant qui se forme est protégé par un gaz de protection, qui contient de 2 à 4 % en volume d'oxygène, de 20 à 30 % en volume d'hélium ou de gaz carbonique, et de 66 à 78 % en volume d'argon.

3. Procédé de soudage de métal sous atmosphère protectrice selon la revendication 1 ou 2, caractérisé en ce que la distance du tube de contact, usuelle lors du soudage à arc électrique tournant, de 25 à 35 mm, est réglée par diminution d'une proportion de 15 à 25 %, et que la tension, usuelle lors du soudage à arc électrique tournant, de 35 à 60 V, est réglée par diminution d'une proportion de 20 à 30 %.

4. Utilisation du procédé selon les revendications précédentes pour le soudage dans des situations de contrainte.
